# EUROPEAN PATENT APPLICATION

(11) **EP 4 537 697 A1**
(43) Date of publication of application: **16.04.2025**
(21) Application number: 22951074.8
(22) Date of filing: 12.07.2022
(51) Int. Cl.: A43B 13/14

(54) **FOOTWEAR**

(71) Applicant: ASICS Corporation, Kobe-shi, Hyogo 650-8555 (JP)
(72) Inventor: HATANO, Genki, Kobe-shi, Hyogo 650-8555 (JP); TATENO, Kenta, Kobe-shi, Hyogo 650-8555 (JP); TANIGUCHI, Norihiko, Kobe-shi, Hyogo 650-8555 (JP); KOZUKA, Yuya, Kobe-shi, Hyogo 650-8555 (JP); TAKASHIMA, Shingo, Kobe-shi, Hyogo 650-8555 (JP)
(74) Representative: TBK
(86) International application number: PCT/JP2022/027470
(87) International publication number: WO 2024/013860

(57) **Abstract**

A footwear (1A) includes a footbed portion (10A) that supports a sole of a wearer's foot and has a ground contact surface (12). The footbed portion (10A) includes a cushioning portion (13) consisting of a single member made of an elastic material with an elastic modulus which is greater than or equal to 0.1 MPa and less than or equal to 100 MPa, and the cushioning portion (13) is constituted of a three-dimensional mesh structure, where a plurality of unit structures, each of which is a three-dimensional lattice structure formed by a plurality of columnar portions which are interconnected, is repeatedly arranged. Each of the plurality of the columnar portions has an extending direction and a maximum outer dimension which is greater than or equal to 1.0 mm and less than or equal to 1.8 mm in a cross-section perpendicular to the extending direction, and a thickness of the cushioning portion (13) in a direction perpendicular to the ground contact surface (12) is greater than or equal to 25.0 mm.

## Description

### TECHNICAL FIELD

The present invention relates to a footwear such as a sandal and a shoe, a sandal and a shoe fitted with a sockliner, and the like.

### BACKGROUND

For example, Japanese Patent Laying-Open No. 2018-187363 (Patent Literature 1) discloses a footwear sole manufactured by a three-dimensional additive manufacturing method. The sole disclosed in this publication is constituted of a three-dimensional mesh structure using a three-dimensional lattice structure as a unit structure.

### CITATION LIST

### PATENT LITERATURE

PTL 1: Japanese Patent Laying-Open No. 2018-187363

### SUMMARY

### TECHNICAL PROBLEM

For instance, in a recovery shoe (recovery sandal) used for purposes such as fatigue recovery through foot pressure dispersion, support of foot arch, and support against heel collapse known as pronation, high deformability is required in a footbed portion of the recovery shoe. The high deformability is not achieved simply by making the footbed portion soft; bottoming out (a state where, upon landing, the footbed portion is substantially compressed to its maximum due to deformation, making further deformation difficult) must not occur, and the footbed portion must be able to stably support a wearer's foot even in a deformed state.

To achieve such deformability, it is necessary to design a cushioning portion provided in the footbed portion not only from a viewpoint of material but also from a viewpoint of structure, and it is assumed that the cushioning portion is constituted of a three-dimensional mesh structure in which a three-dimensional lattice structure is a unit structure, as disclosed in the above-described publication. However, the sole disclosed in the above-described publication is designed to ensure high durability and good wearing feeling for athletic use and has not been examined from the viewpoint of suppressing bottoming out.

Note that the performance of having such high deformability while suppressing bottoming out and being able to stably support the wearer's foot is not only required for footwears used for the above-described recovery purposes, but may also be required for footwears used for other purposes depending on the usage scenario, etc.

Accordingly, the present invention has been made in view of such circumstances and aims to provide a footwear that can stably support the wearer's foot in a deformed state without causing bottoming out during wear.

### SOLUTION TO PROBLEM

The footwear according to the present invention includes a footbed portion that supports a sole of a wearer's foot and has a ground contact surface. The footbed portion includes a cushioning portion consisting of a single member made of an elastic material with an elastic modulus which is greater than or equal to 0.1 MPa and less than or equal to 100 MPa, and the cushioning portion is constituted of a three-dimensional mesh structure, where a plurality of unit structures, each of which is a three-dimensional lattice structure formed by a plurality of columnar portions which are interconnected, is repeatedly arranged. Each of the plurality of the columnar portions has an extending direction and a maximum outer dimension which is greater than or equal to 1.0 mm and less than or equal to 1.8 mm in a cross-section perpendicular to the extending direction, and a thickness of the cushioning portion in a direction perpendicular to the ground contact surface is greater than or equal to 25.0 mm.

### ADVANTAGEOUS EFFECTS OF INVENTION

According to the present invention, it is possible to provide a footwear that can stably support the wearer's foot in a deformed state without causing bottoming out during wear.

### BRIEF DESCRIPTION OF THE DRAWINGS

Fig. 1 is a perspective view of a sandal according to Embodiment 1, viewed from a front right oblique upper side.
Fig. 2 is a perspective view of a sandal shown in Fig. 1, viewed from a rear left oblique lower side.
Fig. 3 is a plan view of the sandal shown in Fig. 1.
Fig. 4 is a side view of the sandal shown in Fig. 1, viewed from a lateral foot side.
Fig. 5 is a schematic diagram for describing a three-dimensional structure of a cushioning portion of the sandal shown in Fig. 1.
Fig. 6 is a schematic diagram showing an initial state of additively manufacturing a sandal body by a three-dimensional additive manufacturing method in a manufacturing method of the sandal shown in Fig. 1.
Fig. 7 is a schematic diagram showing an intermediate state of additively manufacturing the sandal body by the three-dimensional additive manufacturing method in the manufacturing method of the sandal shown in Fig. 1.
Fig. 8 is a schematic diagram showing a final state of additively manufacturing the sandal body by the three-dimensional additive manufacturing method in the manufacturing method of the sandal shown in Fig. 1.
Fig. 9 is a schematic diagram showing another manufacturing method of the sandal shown in Fig. 1.
Fig. 10 is a schematic diagram showing states of a sole portion during landing and stepping off of the sandal shown in Fig. 1.
Fig. 11 is a schematic diagram showing a distribution of thicknesses of columnar portions in the cushioning portion of the sandal shown in Fig. 1.
Fig. 12 is a graph showing a result of a first verification test.
Fig. 13 is a graph showing a result of a second verification test.
Fig. 14 is a schematic diagram showing a distribution of thicknesses of columnar portions in a cushioning portion of a sandal according to a first modification.
Fig. 15 is a schematic cross-sectional view of a footbed portion of a sandal according to a second modification.
Fig. 16 is a schematic cross-sectional view of a footbed portion of a sandal according to a third modification.
Fig. 17 is a schematic cross-sectional view of a footbed portion of a sandal according to a fourth modification.
Fig. 18 is a schematic diagram for describing a three-dimensional structure of a cushioning portion of a sandal according to a fifth modification.
Fig. 19 is a perspective view of a shoe according to Embodiment 2.
Fig. 20 is a perspective view of a shoe according to Embodiment 3.
Fig. 21 is a schematic cross-sectional view along line XXI-XXI shown in Fig. 20.
Fig. 22 is an exploded view of the shoe shown in Fig. 20.
Fig. 23 is a perspective view of a shoe and a sockliner provided therein, according to Embodiment 4.

### DETAILED DESCRIPTION

Hereinafter, embodiments of the present invention will be described in detail with reference to the drawings. In the embodiments described below, the same or common portions are denoted by the same reference signs in the drawings, and description thereof will not be repeated. Note that the term "wearer" used in the following description refers to a person of standard physique whose feet fit the size of the footwear.

### <Embodiment 1>

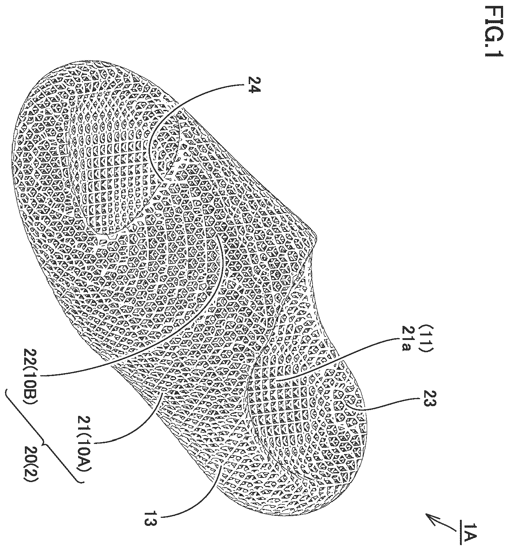

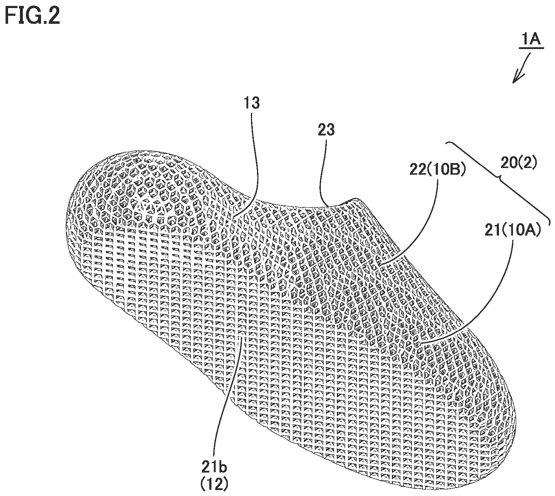

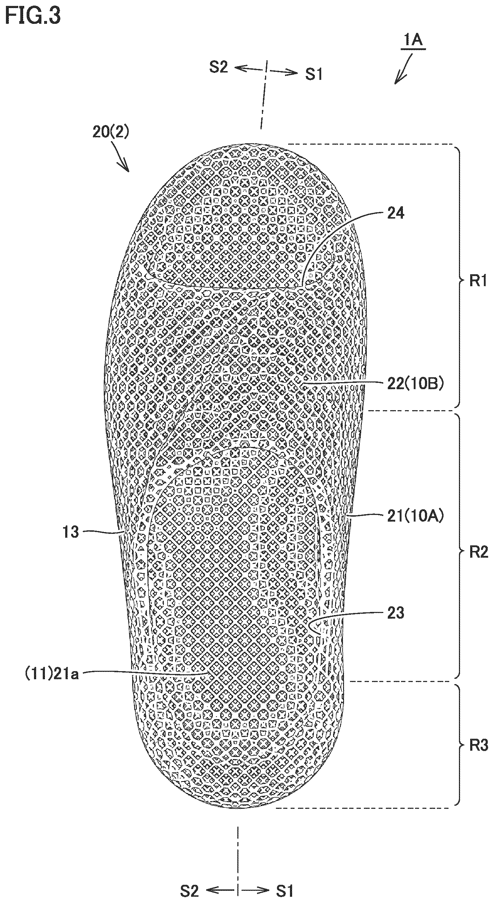

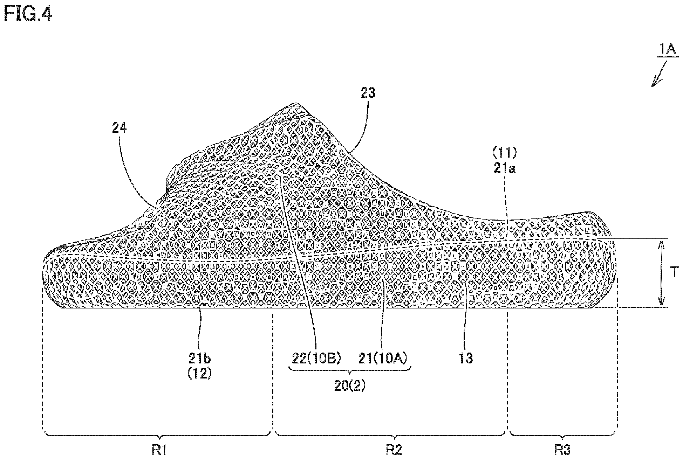

Fig. 1 is a perspective view of a sandal according to Embodiment 1, viewed from a front right oblique upper side, and Fig. 2 is a perspective view of the sandal shown in Fig. 1, viewed from a rear left oblique lower side. Fig. 3 is a plan view of the sandal shown in Fig. 1, and Fig. 4 is a side view of the sandal shown in Fig. 1, viewed from a lateral foot side. First, with reference to Figs. 1 to 4, a configuration of a sandal 1A according to the present embodiment will be described.

As shown in Figs. 1 to 4, the sandal 1A includes a sandal body 20 that includes a sole portion 21 and a belt portion 22. The sandal body 20 consists of a single member and is constituted of an additively manufactured product 2 manufactured by an optical molding method of a three-dimensional additive manufacturing method (i.e., a stereolithography-type three-dimensional additive manufacturing method), which will be described later.

The sole portion 21 constitutes a footbed portion 10A that supports the wearer's foot. An upper surface 21a of the sole portion 21 defines a supporting surface 11 that supports a sole of the wearer's foot during wear, and a lower surface 21b of the sole portion 21 defines a ground contact surface 12 that contacts a ground, a floor, etc. during wear.

The sandal 1A according to the present embodiment is configured so that a periphery on the upper surface 21a side of the sole portion 21 rises to position the wearer's foot on the supporting surface 11 during wear. Therefore, the upper surface 21a of the sole portion 21 has an overall concave shape, and a portion defining a bottom portion of the upper surface 21a of the concave shape corresponds to the supporting surface 11.

It is preferable that the supporting surface 11 is made of a material that provides a non-slip and flexible wearing feeling, and it is preferable that the ground contact surface 12 is made of a non-slip material. In the sandal 1A according to the present embodiment, the supporting surface 11 and the ground contact surface 12 are formed with parts of the sandal body 20, which is a single member, and thus, the supporting surface 11 and the ground contact surface 12 are each made of a non-slip and flexible material. However, the supporting surface 11 and the ground contact surface 12 may be formed separately using members made of different materials or having different hardnesses.

Here, in the sandal 1A according to the present embodiment, the entire sole portion 21 as the footbed portion 10A is configured to be flexible, so that the entire sole portion 21 functions as a cushioning portion 13. The cushioning portion 13 is not only soft but also has improved performance to stably support the wearer's foot in a deformed state without causing bottoming out; the details thereof will be described later.

As shown in Figs. 3 and 4, when viewed in a plan view (i.e., when viewed in a direction perpendicular to the ground contact surface 12), the sole portion 21 of the sandal 1A is divided in a front-rear direction which matches a lengthwise direction of the wearer's foot (up-down direction in Fig. 3, left-right direction in Fig. 4) into a forefoot portion R1 that supports a toe portion and a ball portion of the wearer's foot, a midfoot portion R2 that supports an arch portion of the wearer's foot, and a rearfoot portion R3 that supports a heel portion of the wearer's foot.

Here, when the front end of the sole portion 21 is defined as a reference, a position corresponding to 30% of the dimension in the front-rear direction of the sole portion 21 from the front end is defined as a first boundary position, and a position corresponding to 80% of the dimension in the front-rear direction of the sole portion 21 from the front end is defined as a second boundary position, the forefoot portion R1 corresponds to a portion included between the front end and the first boundary position in the front-rear direction; the midfoot portion R2 corresponds to a portion included between the first boundary position and the second boundary position in the front-rear direction; and the rearfoot portion R3 corresponds to a portion included between the second boundary position and a rear end of the sole in the front-rear direction.

Also, as shown in Fig. 3, when viewed in a plan view, the sandal 1A is divided in the left-right direction (left-right direction in the drawing), which matches a widthwise direction of the wearer's foot, into a medial foot side portion (S1 side portion in the drawing) corresponding to a median side (i.e., the side closer to the median) in the anatomical midline of the foot, and a lateral foot side portion (S2 side portion in the drawing) corresponding to a side opposite to the median side (i.e., the side farther from the median) in the anatomical midline of the foot.

As shown in Figs. 1 to 4, the belt portion 22 constitutes a foot cover portion 10B that covers an instep of the wearer's foot and is positioned above the sole portion 21. In the sandal 1A according to the present embodiment, the belt portion 22 has a strap-like shape.

The belt portion 22 extends in the left-right direction so as to have a generally arched shape when viewed in the front-rear direction. One end of the belt portion 22 is connected to the medial foot side end of the sole portion 21, and the other end of the belt portion 22 is connected to the lateral foot side end of the sole portion 21.

Thus, the periphery of the upper surface 21a of the portion of the sole portion 21 located behind the belt portion 22 and the rear end of the belt portion 22 form a footwear opening 23, and a hollow space is provided between the sole portion 21 and the belt portion 22. Therefore, by inserting the wearer's foot into the hollow space through the footwear opening 23, the sandal 1A can be worn.

Note that, in addition to the above-described footwear opening 23, the sandal 1A according to the present embodiment has a front opening portion 24 formed by the periphery of the upper surface 21a of the portion of the sole portion 21 located in front of the belt portion 22 and the front end of the belt portion 22. During wear, the toes of the wearer's foot are exposed to the outside through the front opening portion 24.

The material of the sandal body 20 is not particularly limited, but it is preferable that the material can be additively manufactured by an optical molding method of a three-dimensional additive manufacturing method and that the material is a resin or rubber material so that the sandal body 20 has appropriate flexibility, elasticity, durability, resilience, stability, and so on after additively manufacturing. More specifically, when the sandal body 20 is made of resin, it can be made of, for example, polyolefin resin, ethylene-vinyl acetate copolymer (EVA), polyamide-based thermoplastic elastomer (TPA, TPAE), thermoplastic polyurethane (TPU), or polyester-based thermoplastic elastomer (TPEE). On the other hand, when the sandal body 20 is made of rubber, it can be made of, for example, butadiene rubber (BR).

The sandal body 20 can also be made of a polymer composition. In that case, examples of polymers contained in the polymer composition include olefin polymers such as olefin elastomers and olefin resins. Examples of olefin polymers include polyolefins such as polyethylene (e.g., linear low-density polyethylene (LLDPE), high-density polyethylene (HDPE), etc.), polypropylene, ethylene-propylene copolymers, propylene-1-hexene copolymers, propylene-4-methyl-1-pentene copolymers, propylene-1-butene copolymers, ethylene-1-hexene copolymers, ethylene-4-methylpentene copolymers, ethylene-1-butene copolymers, 1-butene-1-hexene copolymers, 1-butene-4-methyl-pentene, ethylene-methacrylic acid copolymers, ethylene-methyl methacrylate copolymers, ethylene-ethyl methacrylate copolymers, ethylene-butyl methacrylate copolymers, ethylene-methyl acrylate copolymers, ethylene-ethyl acrylate copolymers, ethylene-butyl acrylate copolymers, propylene-methacrylic acid copolymers, propylene-methyl methacrylate copolymers, propylene-ethyl methacrylate copolymers, propylene-butyl methacrylate copolymers, propylene-methyl acrylate copolymers, propylene-ethyl acrylate copolymers, propylene-butyl acrylate copolymers, ethylene-vinyl acetate copolymers, and propylene-vinyl acetate copolymers.

The above polymers may also be amide polymers such as amide elastomers and amide resins. Examples of amide polymers include polyamide 6, polyamide 11, polyamide 12, polyamide 66, polyamide 610.

Additionally, the above polymers may be ester polymers such as ester elastomers and ester resins. Examples of ester polymers include polyethylene terephthalate, polybutylene terephthalate.

Furthermore, the above polymers may be urethane polymers such as urethane elastomers and urethane resins. Examples of urethane polymers include polyester-based polyurethane, and polyether-based polyurethane.

Moreover, the above polymers may be styrene polymers such as styrene elastomers and styrene resins. Examples of styrene elastomers include styrene-ethylene-butylene copolymers (SEB), styrene-butadiene-styrene copolymers (SBS), hydrogenated SBS (styrene-ethylene-butylene-styrene copolymers (SEBS)), styreneisoprene-styrene copolymers (SIS), hydrogenated SIS (styrene-ethylene-propylene-styrene copolymers (SEPS)), styrene-isobutylene-styrene copolymers (SIBS), styrene-butadiene-styrene-butadiene (SBSB), and styrene-butadiene-styrene-butadiene-styrene (SBSBS). Examples of styrene resins include polystyrene, acrylonitrile-styrene resin (AS), acrylonitrile-butadiene-styrene resin (ABS).

Additionally, the above polymers may be, for example, acrylic polymers such as polymethyl methacrylate, urethane-based acrylic polymers, polyester-based acrylic polymers, polyether-based acrylic polymers, polycarbonate-based acrylic polymers, epoxy-based acrylic polymers, conjugated diene polymer-based acrylic polymers and the hydrogenated products thereof, urethane-based methacrylic polymers, polyester-based methacrylic polymers, polyether-based methacrylic polymers, polycarbonate-based methacrylic polymers, polyester-based urethane acrylates, polycarbonate-based urethane acrylates, polyether-based urethane acrylates, epoxy-based methacrylic polymers, conjugated diene polymer-based methacrylic polymers and the hydrogenated products thereof, polyvinyl chloride resins, silicone elastomers, butadiene rubber, isoprene rubber (IR), chloroprene rubber (CR), natural rubber (NR), styrene-butadiene rubber (SBR), acrylonitrile-butadiene rubber (NBR), butyl rubber (IIR).

As mentioned above, it is preferable that the sandal body 20 is made of a material that provides a non-slip and flexible wearing feeling, and thus, among the above-described materials, it is particularly preferable that the sandal body 20 is made of urethane acrylate. When the sandal body 20 is made of urethane acrylate, the sandal body 20 not only has excellent durability and elasticity but also has sufficient resilience. Note that, as mentioned above, the sandal body 20 is manufactured using the optical molding method of the three-dimensional additive manufacturing method, and thus, the sandal body 20 contains a curing agent as a secondary component.

Here, the sandal 1A according to the present embodiment has improved performance not only in material aspects as described above but also in structural aspects. More specifically, it is configured that in the sandal 1A, the sole portion 21 as the footbed portion 10A which functions as the cushioning portion 13 is constituted of a three-dimensional mesh structure as described later, and by ensuring that a portion of the three-dimensional mesh structure constituting the cushioning portion 13 satisfies predetermined shape and dimensional conditions, the sole portion 21 can stably support the wearer's foot in a deformed state without causing bottoming out.

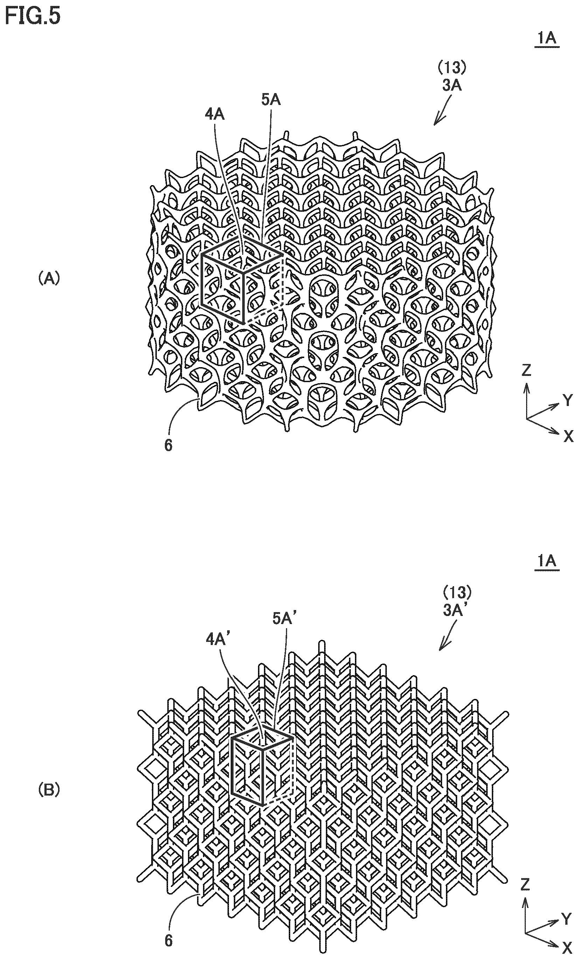

Below, this point will be described in detail with reference to Fig. 5(A) and Fig. 5(B), as well as the aforementioned Fig. 4. Here, Fig. 5(A) is a schematic diagram for describing a three-dimensional structure of the cushioning portion of the sandal shown in Fig. 1, and Fig. 5(B) is a schematic diagram for describing a three-dimensional structure of a cushioning portion having a configuration based on the structure shown in Fig. 5(A).

As shown in Fig. 5(A), the sole portion 21 functioning as the cushioning portion 13 of the sandal 1A is constituted of a three-dimensional mesh structure 3A, in which a plurality of unit structures 4A each having a three-dimensional lattice structure is repeatedly arranged. More specifically, the plurality of unit structures 4A is regularly and continuously arranged repeatedly along each of a width direction (X direction shown in the drawing), a depth direction (Y direction in the drawing), and a height direction (Z direction in the drawing). In Fig. 5(A), only a few adjacent unit structures 4A in the width direction, the depth direction, and the height direction respectively are extracted and shown.

The unit structure 4A having the three-dimensional lattice structure has a three-dimensional shape formed by a plurality of columnar portions 6 extending in predetermined directions and interconnected. The plurality of the columnar portions 6 is configured so that the extending directions thereof intersect with those of adjacent columnar portions 6, thereby forming the three-dimensional lattice structure. The illustrated unit structure 4A is known as fluorite-type lattice. Note that a unit space 5A occupied by the unit structure 4A has a polyhedral shape; in the illustrated unit structure 4A, the unit space 5A has a hexahedral shape.

In the three-dimensional mesh structure 3A shown in Fig. 5(A), each of the plurality of the columnar portions 6 is configured to have a substantially cylindrical outer shape. Therefore, the cross-sectional shape perpendicular to the extending direction of each of the plurality of the columnar portions 6 is substantially circular. Additionally, in the illustrated three-dimensional mesh structure 3A, the thickness of each of the plurality of the columnar portions 6 is configured to change continuously in the extending direction thereof; specifically, it is configured that the thickness is greater at a connection portion between adjacent columnar portions 6 and becomes less as the distance from the connection portion increases. With this configuration, it is possible to increase the durability while maintaining the flexibility.

On the other hand, a three-dimensional mesh structure 3A' shown in Fig. 5(B) has a three-dimensional structure with a configuration based on the structure shown in Fig. 5(A), a unit structure 4A' is a fluorite-type lattice, and a unit space 5A' occupied by the unit structure 4A' has a hexahedral shape. Here, in the three-dimensional mesh structure 3A', unlike the structure shown in Fig. 5(A), the thickness of each of the plurality of the columnar portions 6 is uniform in the extending direction thereof. The three-dimensional mesh structure 3A' having such a configuration may be applied to the cushioning portion 13 of the sandal 1A according to the present embodiment instead of the three-dimensional mesh structure 3A shown in Fig. 5(A).

Note that various other structures can be used as the unit structure 4A, such as rectangular lattices, diamond lattices, octahedral lattices, double pyramid lattices, or structures with various supports added to these lattices.

Here, in the sandal 1A according to the present embodiment, the cushioning portion 13 is made of an elastic material with an elastic modulus which is greater than or equal to 0.1 MPa and less than or equal to 100 MPa. With such a configuration, when a load is applied to the cushioning portion 13 (i.e., during landing or stepping off), the cushioning portion 13 can exhibit high cushioning performance to effectively disperse foot pressure. To more reliably achieve high cushioning performance, the elastic modulus of the material constituting the cushioning portion 13 may be greater than or equal to 1 MPa and less than or equal to 50 MPa.

Moreover, in the sandal 1A according to the present embodiment, each of the above-described plurality of the columnar portions 6 has an extending direction and a maximum outer dimension, which is greater than or equal to 1.0 mm and less than or equal to 1.8 mm, in a cross-section perpendicular to the extending direction. Furthermore, a thickness T of the cushioning portion 13 in the direction perpendicular to the ground contact surface 12 (see Fig. 4) is greater than or equal to 25.0 mm. By satisfying these conditions, the sandal can stably support the wearer's foot in a deformed state without causing bottoming out. Note that in Fig. 4, for illustration purposes, a symbol T indicating the thickness is attached to the thickest portion of the sole portion 21 as the cushioning portion 13. However, in the sandal 1A according to the present embodiment, even the thinnest portion of the cushioning portion 13 satisfies the condition that the thickness is greater than or equal to 25.0 mm.

Here, when the thickness of each of the plurality of the columnar portions 6 exceeds the above-described range of the maximum outer dimension, the rigidity of the cushioning portion 13 becomes excessively high, and thus, necessary deformability cannot be provided to the cushioning portion 13. On the other hand, when the thickness of each of the plurality of the columnar portions 6 is smaller than the above-described range of the maximum outer dimension, the rigidity of the cushioning portion 13 may significantly decrease and cause bottoming out. Additionally, when the thickness of each of the plurality of the columnar portions 6 is smaller than the above-described range of the maximum outer dimension, problems such as reduced durability or difficulty in manufacturing using the three-dimensional additive manufacturing method in the first place may arise.

Furthermore, when the thickness T of the cushioning portion 13 in the direction perpendicular to the ground contact surface 12 is less than the above-described range, in a case where a load is applied to the cushioning portion 13 (i.e., during landing, stepping off, standing, etc.), there will be a lack of sufficient deformation margin for the cushioning portion 13 to deform, which will result in a high risk of bottoming out.

These conditions were each derived based on the results of a first verification test and a second verification test described later. By satisfying these conditions, the wearer's foot can be stably supported in a deformed state without bottoming out during wear, as will be described in detail later.

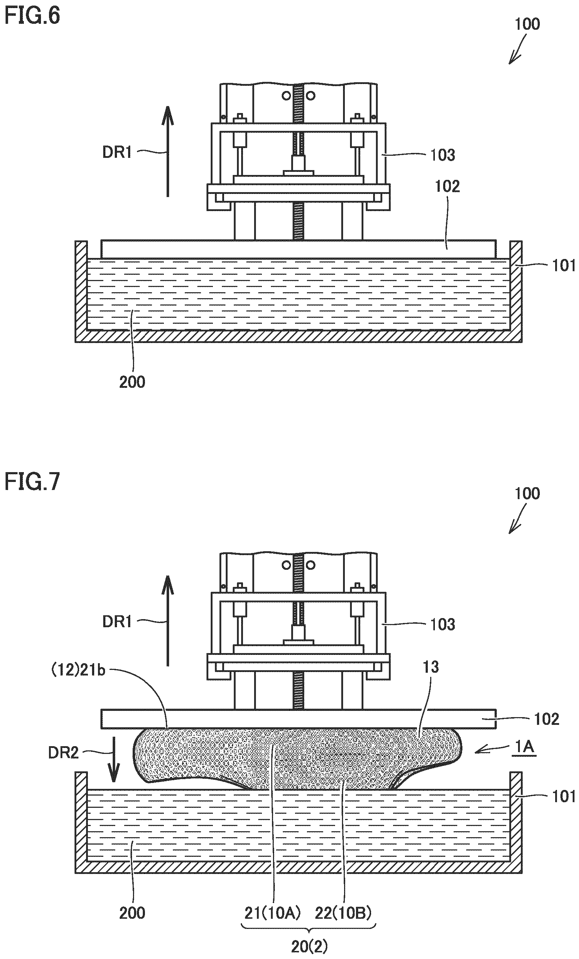

Figs. 6 to 8 are schematic diagrams illustrating the manufacturing method of the sandal shown in Fig. 1, showing the initial state, intermediate state, and final state of additively manufacturing the sandal body using the three-dimensional additive manufacturing method, respectively. Next, with reference to Figs. 6 to 8, the specific manufacturing method for manufacturing the sandal 1A according to the present embodiment will be described.

As described above, in the sandal 1A according to the present embodiment, the sandal body 20, which includes the sole portion 21 and the belt portion 22, is constituted of the additively manufactured product 2 consisting of a single member manufactured using the optical molding method of the three-dimensional additive manufacturing method. The sandal body 20 can be additively manufactured, for example, using a three-dimensional additive manufacturing apparatus 100, as shown in Figs. 6 to 8.

The three-dimensional additive manufacturing apparatus 100 manufactures additively manufactured products using the optical molding method of the three-dimensional additive manufacturing method. Here, the optical molding method of the three-dimensional additive manufacturing method is an additively manufacturing method that uses a photocurable liquid resin or liquid rubber, which is cured when exposed to light of a specific wavelength, as the main raw material, and manufactures additively manufactured products of desired shapes through sequentially stacking cured portions by irradiating the photocurable liquid resin or liquid rubber with light of the specific wavelength. As light of the specific wavelength, for example, ultraviolet is used, and in that case, ultraviolet-curable resin or rubber is used as the main raw material. Note that the above-described liquid resin or liquid rubber as the main raw material is not limited to single-component liquids and may also include two-component liquids, etc.

As shown in Figs. 6 to 8, the three-dimensional additive manufacturing apparatus 100 includes a light source (not shown), a reservoir 101, a platform 102, and an elevating mechanism 103. The reservoir 101 is a portion that stores a liquid resin 200, etc. as raw materials. The platform 102 is used to hold and move the additively manufactured product 2. The elevating mechanism 103 moves the platform 102 in the up-down direction.

As shown in Fig. 6, in the three-dimensional additive manufacturing apparatus 100, the platform 102 is first moved by the elevating mechanism 103 so that a lower surface of the platform 102 is in contact with a liquid surface of the liquid resin 200, etc., and in this state, light of a specific wavelength emitted from the light source is irradiated onto the vicinity of the liquid surface of the liquid resin 200, etc. in a predetermined pattern to expose the liquid. Thus, the portion of the liquid resin 200, etc. in the vicinity of the liquid surface cures in layers while adhering to the lower surface of the platform 102, forming a first cured layer.

Next, the platform 102 is moved upward by a predetermined amount (i.e., in the direction of arrow DR1 in the drawing) by the elevating mechanism 103, so that a lower surface of the first cured layer is in contact with the liquid surface of the liquid resin 200, etc., and in this state, light of the specific wavelength emitted from the light source is irradiated onto the vicinity of the liquid surface of the liquid resin 200, etc. in the predetermined pattern to expose the liquid. Thus, the portion of the liquid resin 200, etc. in the vicinity of the liquid surface cures in layers while adhering to the lower surface of the first cured layer, forming a second cured layer.

By repeating steps similar to the step for forming the second cured layer (i.e., the movement step of the platform 102 and the exposure step of the liquid resin 200, etc.), as shown in Fig. 7, a plurality of cured layers is sequentially stacked downward (i.e., in the direction of arrow DR2 in the drawing), thereby advancing the additive manufacturing of the sandal body 20. During this additive manufacturing progression, the additive manufacturing of the sole portion 21 and the additive manufacturing of the belt portion 22 continue.

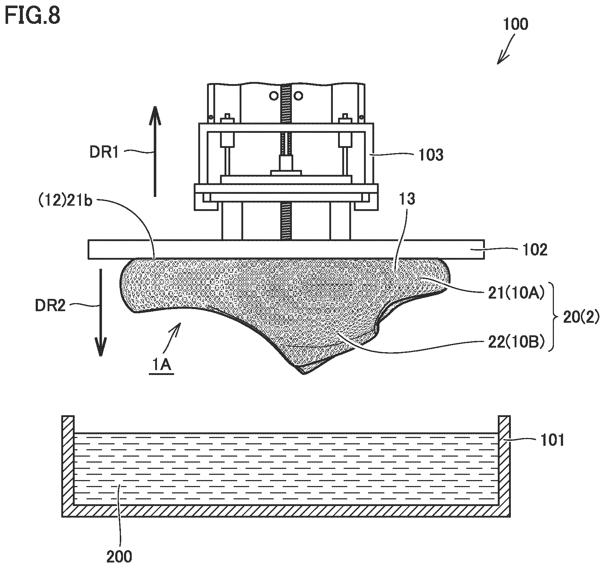

Then, as shown in Fig. 8, after all portions of the sandal body 20 have been additively manufactured, the platform 102 is further lifted upward by the elevating mechanism 103, and the sandal body 20 is separated from the liquid resin 200, etc. stored in the reservoir 101 and removed from three-dimensional additive manufacturing apparatus 100. Here, the sandal body 20 after completion of additive manufacturing has not yet fully cured and is in a relatively soft state. Therefore, the extracted sandal body 20 undergoes additional washing and heat treatments for full curing, followed by washing and drying treatments to complete the manufacturing of the sandal 1A.

Thus, in the manufacturing method of the sandal 1A according to the present embodiment, by using the optical molding method of the three-dimensional additive manufacturing method, the sole portion 21 is sequentially additively manufactured in the direction perpendicular to the ground contact surface 12 from the ground contact surface 12 side, and subsequently, the belt portion 22 is sequentially additively manufactured. That is, in the manufacturing method of the sandal 1A according to the present embodiment, the direction perpendicular to the ground contact surface 12 of the sandal 1A matches the direction in which the plurality of cured layers is sequentially stacked and the sandal 1A is additively manufactured (i.e., the direction of arrow DR2 in the drawing).

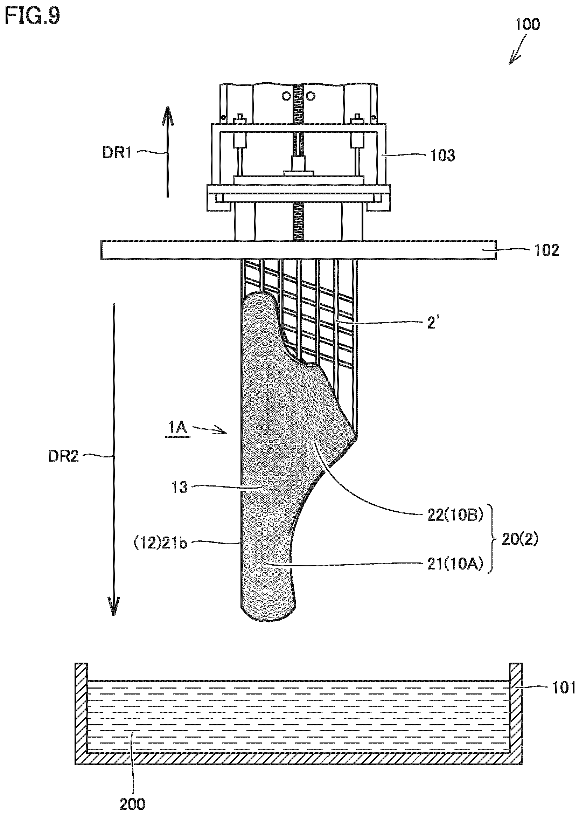

Fig. 9 is a schematic diagram showing another manufacturing method of the sandal shown in Fig. 1. Next, with reference to Fig. 9, the another specific manufacturing method for manufacturing the sandal 1A according to the present embodiment will be described.

As shown in Fig. 9, in the another manufacturing method of the sandal 1A according to the present embodiment, the sandal 1A is manufactured by manufacturing the sandal body 20, which consists of a single member, using the optical molding method of the three-dimensional additive manufacturing method with the three-dimensional additive manufacturing apparatus 100, similar to the manufacturing method of the sandal 1A according to the present embodiment described above (i.e., the manufacturing method of the sandal 1A described with reference to Figs. 6 to 8). However, in the another manufacturing method of the sandal 1A according to the present embodiment, the direction in which the sandal body 20 is additively manufactured differs from that in the manufacturing method of the sandal 1A according to the present embodiment described above.

Specifically, in the another manufacturing method of the sandal 1A according to the present embodiment, by using the optical molding method of the three-dimensional additive manufacturing method, the sandal body 20 is sequentially additively manufactured from the forefoot portion R1 (see Fig. 3, Fig. 4, etc.) side toward the rearfoot portion R3 (see Fig. 3, Fig. 4, etc.) side in the front-rear direction. That is, in the another manufacturing method of the sandal 1A according to the present embodiment, the front-rear direction of the sandal body 20 matches the direction in which the plurality of cured layers is sequentially 1 stacked (the direction of arrow DR2 in the drawing).

Note that when adopting the another manufacturing method of the sandal 1A according to the present embodiment described above, due to the relation between the shape of the sandal body 20 to be additively manufactured and the posture of the sandal body 20 (i.e., orientation) during additive manufacturing, it is necessary to form a support portion 2' separately from the sandal body 20, as shown in Fig. 9, so that the shape of the relatively soft sandal body 20 is maintained during additive manufacturing. The support portion 2' is detached and removed from the sandal body 20 after the additive manufacturing of the sandal body 20.

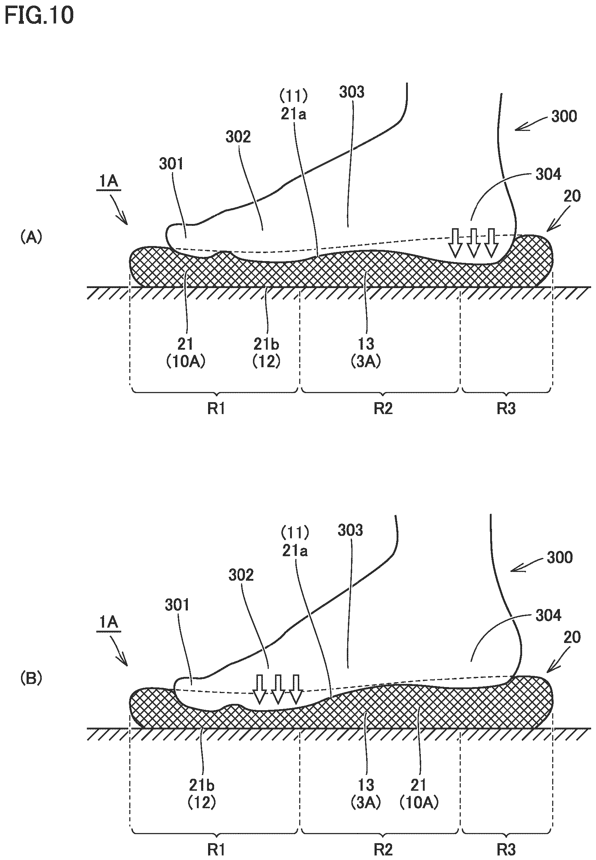

Fig. 10(A) and Fig. 10(B) are schematic diagrams showing states of the sole portion during landing and stepping off of the sandal shown in Fig. 1, respectively. Next, with reference to Fig. 10(A) and Fig. 10(B), the performance of the cushioning portion 13 of the sandal 1A according to the present embodiment will be described. Note that illustration of the belt portion 22 is omitted in Fig. 10(A) and Fig. 10(B).

As described above, in the sandal 1A according to the present embodiment, the sole portion 21 includes the cushioning portion 13 consisting of a single member made of an elastic material with an elastic modulus which is greater than or equal to 0.1 MPa and less than or equal to 100 MPa. The cushioning portion 13 is constituted of the three-dimensional mesh structure 3A, where a plurality of the unit structures 4A, each of which is a three-dimensional lattice structure formed by a plurality of the columnar portions 6 which are interconnected, is repeatedly arranged. Each of the plurality of the columnar portions 6 has an extending direction and a maximum outer dimension which is greater than or equal to 1.0 mm and less than or equal to 1.8 mm in a cross-section perpendicular to the extending direction (in the present embodiment, since each of the plurality of the columnar portions 6 is substantially cylindrical, the maximum outer dimension is equal to the diameter), and the thickness T (see Fig. 4) of the cushioning portion 13 in the direction perpendicular to the ground contact surface 12 is greater than or equal to 25.0 mm.

By satisfying these conditions, as shown in Fig. 10(A), during landing, a large deformation occurs in a portion of the sole portion 21 (i.e., the cushioning portion 13) corresponding to a heel portion 304 of a wearer's foot 300 (i.e., from the rear end side portion of the midfoot portion R2 to the front end vicinity portion of the rearfoot portion R3), which is the portion where the greatest load is applied. Along with this, the upper surface 21a of the sole portion 21, which serves as the supporting surface 11, is displaced toward the lower surface 21b side, which serves as the ground contact surface 12, causing the heel portion 304 of the wearer's foot 300 to sink.

At this time, the flexibility of the cushioning portion 13 is sufficiently ensured while the thickness of the cushioning portion 13 is sufficiently ensured, and thus, bottoming out (a state where, upon landing, the sole portion 21 is substantially compressed to its maximum due to deformation, making further deformation difficult) does not occur, and the wearer's foot pressure is dispersed, providing the wearer with a flexible stepping feeling.

Moreover, since the portion of the sole portion 21 corresponding to an arch portion 303 of the wearer's foot 300 does not receive a large load compared to the portion of the sole portion 21 corresponding to the heel portion 304 of the wearer's foot 300, as the portion of the sole portion 21 corresponding to the heel portion 304 of the wearer's foot 300 deforms significantly and locally, the sunken heel portion 304 of the wearer's foot 300 is held in a manner of being wrapped by the sole portion 21, and thus, even in a state where the sole portion 21 is deformed, the wearer's foot 300 is stably supported.

On the other hand, as shown in Fig. 10(B), during stepping off, a large deformation occurs in a portion of the sole portion 21 (i.e., the cushioning portion 13) corresponding to a ball portion 302 of the wearer's foot 300 (i.e., from the rear end vicinity portion of the forefoot portion R1 to the front end side portion of the midfoot portion R2), which is the portion where the greatest load is applied. Along with this, the upper surface 21a of the sole portion 21, which serves as the supporting surface 11, is displaced toward the lower surface 21b side, which serves as the ground contact surface 12, causing the ball portion 302 of the wearer's foot 300 to sink.

At this time, the flexibility of the cushioning portion 13 is sufficiently ensured while the thickness of the cushioning portion 13 is sufficiently ensured, and thus, bottoming out does not occur, and the wearer's foot pressure is dispersed, providing the wearer with a flexible stepping feeling.

Moreover, since the portions of the sole portion 21 corresponding to a toe portion 301 and the arch portion 303 of the wearer's foot 300 do not receive a large load compared to the portion of the sole portion 21 corresponding to the ball portion 302 of the wearer's foot 300, as the portion of the sole portion 21 corresponding to the ball portion 302 of the wearer's foot 300 deforms significantly and locally, the sunken ball portion 302 of the wearer's foot 300 is held in a manner of being wrapped by the sole portion 21, and thus, even in a state where the sole portion 21 is deformed, the wearer's foot 300 is stably supported.

Note that, although not illustrated here, during standing, large deformation occurs in the portions of the sole portion 21 (i.e., the cushioning portion 13) corresponding to the ball portion 302 and the heel portion 304 of the wearer's foot 300, which are the portions where the greatest load is applied, causing the ball portion 302 and the heel portion 304 of the wearer's foot 300 to sink. In that case, bottoming out does not occur, the wearer is provided with a flexible stepping feeling, and the sunken ball portion 302 and the sunken heel portion 304 of the wearer's foot 300 are held in a manner of being wrapped by the sole portion 21, and thus, the wearer's foot 300 is stably supported.

Such a stepping feeling (wearing feeling) is unique and unprecedented, making the footwear particularly suitable for recovery uses or relaxation uses, such as fatigue recovery through foot pressure dispersion, support of foot arch, and support against heel collapse known as pronation.

Thus, with the sandal 1A according to the present embodiment, it is possible to provide a sandal that can stably support the wearer's foot in a deformed state without causing bottoming out during wear.

Here, from the perspective of ensuring sufficient deformation margin for the cushioning portion 13 to deform, it is preferable, in addition to setting the thickness T of the cushioning portion 13 in the direction perpendicular to the ground contact surface 12 to be greater than or equal to 25.0 mm as described above, to set an occupancy rate of the cushioning portion 13 to be greater than or equal to 10% and less than or equal to 45%. With this configuration, an appropriate space is formed inside the cushioning portion 13, and thus, the deformation of the columnar portions 6 can be promoted and high deformability can be ensured.

Additionally, by setting the length of one side of the unit space 5A, which is a polyhedral space occupied by each of the unit structures 4A, to be greater than or equal to 3.0 mm and less than or equal to 20.0 mm, it becomes difficult for foreign matters to enter the interior of the cushioning portion 13, and it becomes possible to prevent foreign matters from entering the cushioning portion 13 and inhibiting the deformability.

Furthermore, by adopting the three-dimensional lattice structure as the unit structure 4A where all of the plurality of the columnar portions 6 included therein extends non-parallel to the direction perpendicular to the ground contact surface 12, buckling of the columnar portions 6 when a load is applied can be suppressed, which helps to ensure high deformability and prevent bottoming out.

Moreover, while the maximum outer dimension in the cross-section perpendicular to the extending direction of each of the plurality of the columnar portions 6 described above may be the same throughout the cushioning portion 13, the maximum outer dimension may also vary depending on the portion of the sole portion 21. In the sandal 1A according to the present embodiment, the maximum outer dimension is non-uniform across different portions of the sole portion 21; specifically, the maximum outer dimension is configured to have a distribution within the range of being greater than or equal to 1.0 mm and less than or equal to 1.8 mm.

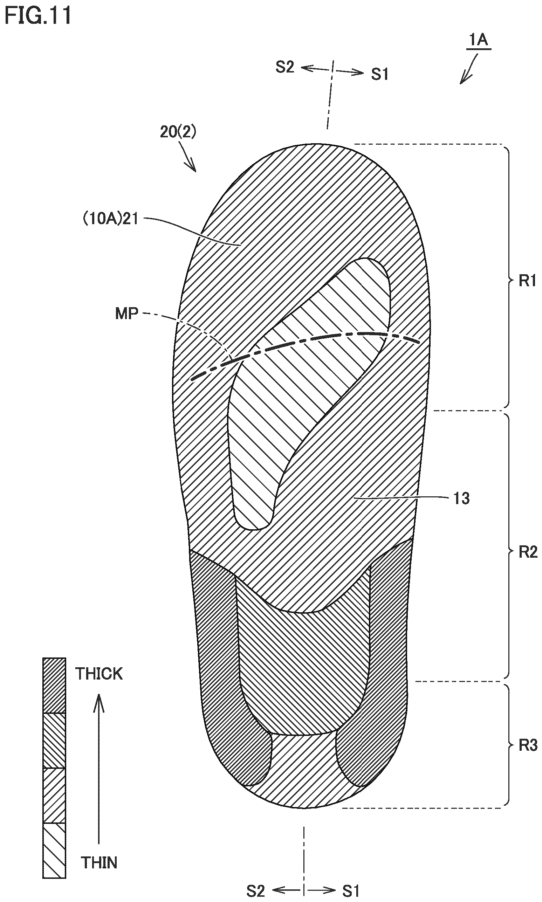

Fig. 11 is a schematic diagram showing a distribution of thicknesses of columnar portions in the cushioning portion of the sandal shown in Fig. 1. Below, with reference to Fig. 11, the distribution of the thicknesses of the columnar portions 6 in the cushioning portion 13 of the sandal 1A according to the present embodiment will be described.

As shown in Fig. 11, in the sandal 1A, in a substantially central region in the front-rear direction of the forefoot portion R1, which is a region including a portion of the sole portion 21 as the cushioning portion 13 that supports a portion of the sole of the foot corresponding to an MP joint of the wearer (the portion indicated by symbol MP in the drawing), the thicknesses of the columnar portions 6 are configured to be smaller than the thicknesses of the columnar portions 6 in the adjacent regions.

On the other hand, in the substantially central region of the sole portion 21 in the width direction from the rear end of the midfoot portion R2 to the front end of the rearfoot portion R3, which includes the portion supporting a portion of the sole of the foot corresponding to the heel portion of the wearer, the thicknesses of the columnar portions 6 are configured to be larger than the thicknesses of the columnar portions 6 in the regions adjacent in the front-rear direction. Additionally, the thicknesses of the columnar portions 6 in both outer regions in the width direction from the rear end of the midfoot portion R2 to the front end of the rearfoot portion R3 are configured to be larger than the thicknesses of the columnar portions 6 in the substantially central region in the width direction.

With such a configuration, it is possible not only to flexibly support the portion of the sole of the foot corresponding to the MP joint of the wearer and the heel portion of the sole of the foot but also to hold the heel portion of the sole of the foot, which requires more stable holding, more stably than the portion of the sole of the foot corresponding to the MP joint of the wearer, and thus, not only can the sandal provide an excellent wearing feeling, but the shape maintenance of the sandal can also be improved.

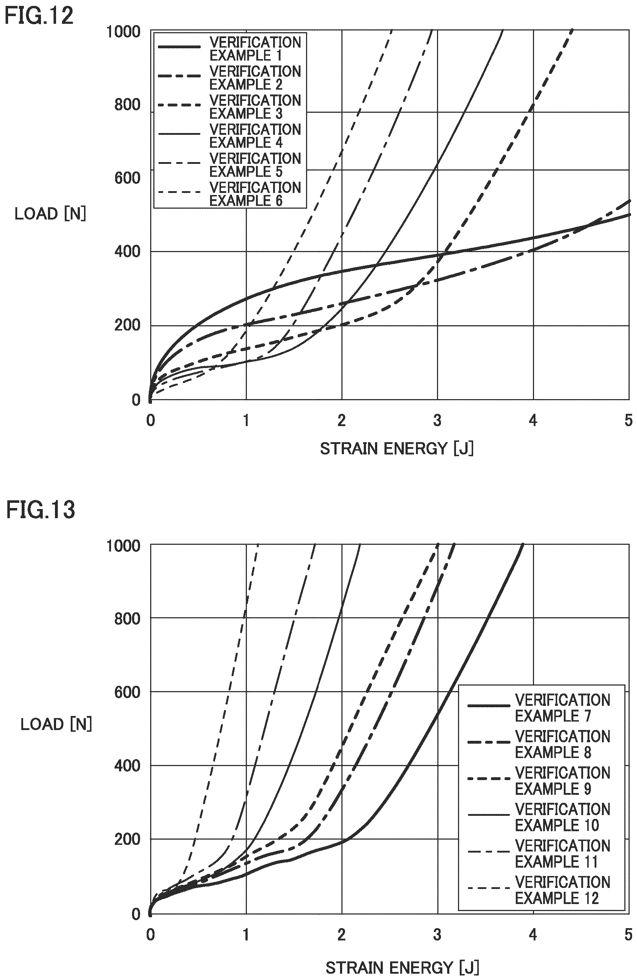

Fig. 12 is a graph showing the results of the first verification test, and Fig. 13 is a graph showing the results of the second verification test. Next, with reference to Fig. 12 and Fig. 13, the first verification test and the second verification test, which examined the extent to which changes in the structure of the cushioning portion 13 affect the deformability and bottoming out of the cushioning portion 13, will be described.

In both the first verification test and the second verification test, a plurality of types of samples with configurations based on the above-described cushioning portion 13 were actually prototyped, and by compressing these samples using a compression testing machine, the correlation between load and strain energy of these samples was measured.

In the first verification test shown in Fig. 12, the diameters of the columnar portions included in the unit structure constituting the cushioning portion were changed in various ways, while other conditions were kept the same. The size and shape of the cushioning portion were a rectangular shape with a dimension of 35.0 mm in a direction of load application and dimensions of 50.0 mm in both of the two axial directions perpendicular to the direction of load application. The diameters of the columnar portions included in the unit structure were 1.6 mm, 1.4 mm, 1.2 mm, 1.1 mm, 1.0 mm, and 0.9 mm in verification examples 1 to 6, respectively.

Here, when bottoming out occurs in the cushioning portion, the load, which increases with the strain energy, rises significantly more than previously, and thus, in the graph shown in Fig. 11, this appears as an inflection point in a load-strain energy curve.

Examining the results of the first verification test from this perspective, in verification example 6 with a diameter of the columnar portion of 0.9 mm, the inflection point appears earlier (i.e., at a smaller strain energy) compared to verification examples 1 to 5 with larger diameters of the columnar portions. The maximum strain energy accumulated in the sole portion during landing is about 1.0 J, and thus, in the verification example 6, the strain energy at the time the inflection point appears is less than 1.0 J, raising concerns that bottoming out may occur during normal use. In contrast, in verification examples 1 to 5 with the diameters of the columnar portions being greater than or equal to 1.0 mm, the inflection point does not occur below 1.0 J, indicating effective suppression of bottoming out.

On the other hand, when the diameter of the columnar portion exceeds 1.8 mm, the rigidity of the cushioning portion becomes high, which may result in a decrease in flexibility. Therefore, based on the results of the first verification test, it is understood that setting the diameter of the columnar portion (i.e., the maximum outer dimension in the cross-section perpendicular to the extending direction of each of the plurality of the columnar portions 6 described above) to be greater than or equal to 1.0 mm and less than or equal to 1.8 mm allows for a cushioning portion with excellent deformability that prevents bottoming out during wear.

In the second verification test shown in Fig. 13, the thickness of the cushioning portion was changed in various ways, while other conditions were kept the same. The size and shape of the cushioning portion were a rectangular shape with dimensions of 50.0 mm in both of the two axial directions perpendicular to the direction of load application. The thickness of the cushioning portion was set to 40.0 mm, 35.0 mm, 30.0 mm, 25.0 mm, 20.0 mm, and 15.0 mm in verification examples 7 to 12, respectively. The diameters of the columnar portions included in the unit structure constituting the cushioning portion were all 1.2 mm.

Examining the results of the second verification test, in verification examples 11 and 12 with the thicknesses of the cushioning portion being 20.0 mm and 15.0 mm, the above-described inflection point occurs at strain energies below 1.0 J, raising concerns about bottoming out during normal use. In contrast, in verification examples 7 to 10 with the diameters of the cushioning portions being greater than or equal to 25.0 mm, the inflection point does not occur below 1.0 J, indicating effective suppression of bottoming out.

Therefore, based on the results of the second verification test, it is understood that setting the thickness of the cushioning portion 13 to be greater than or equal to 25.0 mm allows for a cushioning portion with excellent deformability that prevents bottoming out during wear.

In the sandal 1A of the present embodiment described above, the entire sole portion 21 as the footbed portion 10A satisfies the above-described predetermined conditions (i.e., the basic structure of the three-dimensional mesh structure that constitutes the sole portion 21 and the elastic modulus of the material that constitutes the sole portion 21, the maximum outer dimension in the cross-section perpendicular to the extending direction of each of the plurality of the columnar portions included therein, and the thickness in the direction perpendicular to the ground contact surface, etc.), and thus, although the example has been described in a case where the entire sole portion 21 is configured as the cushioning portion 13, it is not necessary that the entire sole portion 21 is configured as the cushioning portion 13 that satisfies the above-described predetermined conditions, and only a part of the sole portion 21 may be configured as the cushioning portion 13.

Here, bottoming out is likely to occur in portions of the sole portion 21 where large loads are applied to the sole portion 21 during landing, stepping off, standing, etc., and thus, providing the cushioning portion 13 only in such portions or only in a part of such portions can achieve appropriate effects. Based on this viewpoint, in the portion of the sole portion 21 that, for example, supports the toe portion of the wearer's foot, where the load applied is relatively small, the thickness can be set to be less than or equal to 25.0 mm, the basic structure of the three-dimensional mesh structure which constitutes that portion can be made different from the structure described above, and various other configuration changes can be made.

As one example, a guideline for the portion of the sole portion 21 where the cushioning portion 13 should be arranged is that, considering that the total load applied to the sole portion 21 when standing on both feet is approximately less than or equal to 500 N, and that the portion receiving the highest pressure at that time has a pressure of approximately 200 kPa, it is possible to adopt a configuration in which the cushioning portion 13 is arranged, for example, only in portions that are frequently subjected to pressures which are greater than or equal to 150 kPa, or only in portions that are frequently subjected to pressures which are greater than or equal to 100 kPa.

Thus, as long as the portions configured as the cushioning portion 13 by satisfying the above-described predetermined conditions are provided in at least a part of the sole portion 21 as the footbed portion 10A, it is not necessary for the entire sole portion 21 to satisfy the above-described predetermined conditions. Note that second to fourth modifications described later specifically exemplify cases where only a part of the sole portion 21 is configured as the cushioning portion 13 in this manner.

### <First Modification>

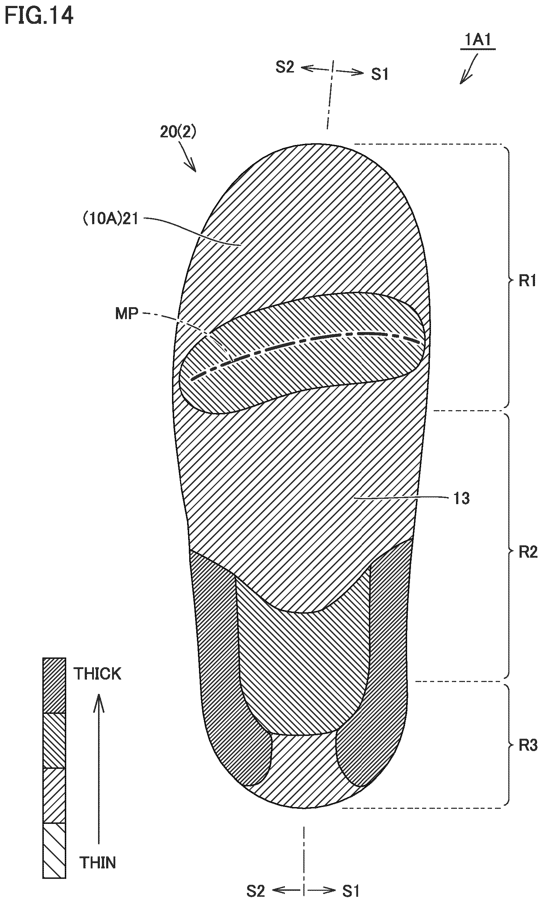

Fig. 14 is a schematic diagram showing a distribution of thicknesses of columnar portions in a cushioning portion of a sandal according to the first modification. Below, with reference to Fig. 14, a sandal 1A1 according to the first modification based on Embodiment 1 described above will be described.

As shown in Fig. 14, the sandal 1A1 according to the first modification differs in its configuration from the sandal 1A according to Embodiment 1 described above only in that the distribution of the thicknesses of the columnar portions 6 of the cushioning portion 13 is different.

Specifically, in the sandal 1A1 according to the first modification shown in Fig. 14, in a rear end vicinity region of the forefoot portion R1, which is a region including a portion of the sole portion 21 as the cushioning portion 13 that supports a portion of the sole of the foot corresponding to an MP joint of the wearer (the portion indicated by symbol MP in the drawing), the thicknesses of the columnar portions 6 are configured to be larger than the thicknesses of the columnar portions 6 in the adjacent regions.

With such a configuration, it is possible not only to flexibly support the portion of the sole of the foot corresponding to the MP joint of the wearer and the heel portion of the sole of the foot but also to hold these portions stably, and thus, not only can the sandal provide an excellent wearing feeling, but the shape maintenance of the sandal can also be improved, and furthermore, the sandal can be made durable.

Therefore, even in the case of the sandal 1A1 according to the first modification, it is possible to obtain effects similar to the effects described in Embodiment 1 described above, providing a sandal that can stably support the wearer's foot in a deformed state without causing bottoming out.

### <Second to Fourth Modifications>

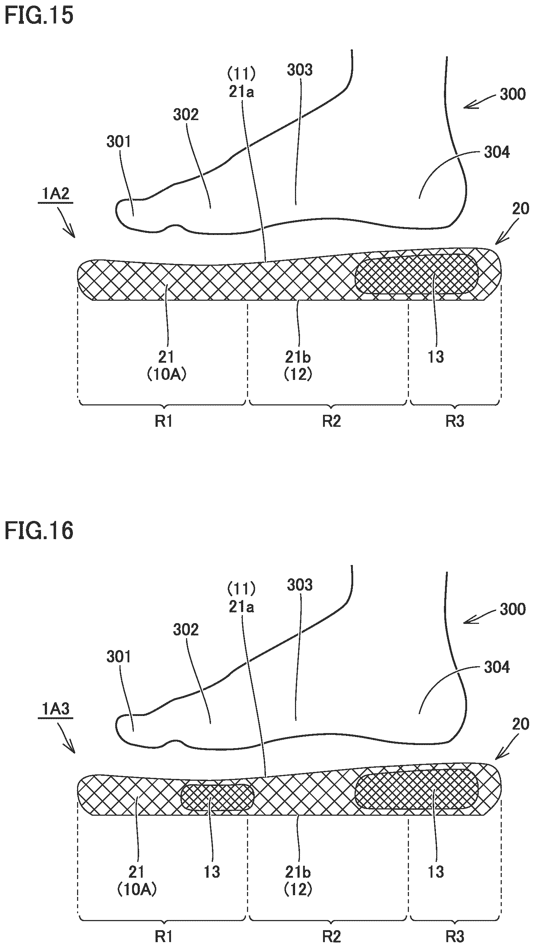

Fig. 15 to Fig. 17 are schematic cross-sectional views of footbed portions of sandals according to the second to fourth modifications, respectively. Below, with reference to Fig. 15 to Fig. 17, the sandals 1A2 to 1A4 according to the second to fourth modifications based on Embodiment 1 described above will be described.

As shown in Fig. 15 to Fig. 17, the sandals 1A2 to 1A4 according to the second to fourth modifications differ in their configurations from the sandal 1A according to Embodiment 1 described above only in that the position of the cushioning portion 13 provided in the footbed portion 10A is different. More specifically, in the sandal 1A according to Embodiment 1 described above, the entire footbed portion 10A is configured as the cushioning portion 13, however, in the sandals 1A2 to 1A4 according to the second to fourth modifications, the cushioning portion 13 is partially provided in the footbed portion 10A.

Specifically, in the sandal 1A2 according to the second modification shown in Fig. 15, the cushioning portion 13 is provided only in the portion of the footbed portion 10A corresponding to the heel portion 304 of the wearer's foot 300 (i.e., from the rear end side portion of the midfoot portion R2 to the front end vicinity portion of the rearfoot portion R3).

On the other hand, in the sandal 1A3 according to the third modification shown in Fig. 16, the cushioning portion 13 is provided separately and independently in both the portion corresponding to the ball portion 302 of the wearer's foot 300 (i.e., from the rear end vicinity portion of the forefoot portion R1 to the front end side portion of the midfoot portion R2) and the portion of the footbed portion 10A corresponding to the heel portion 304 of the wearer's foot 300.

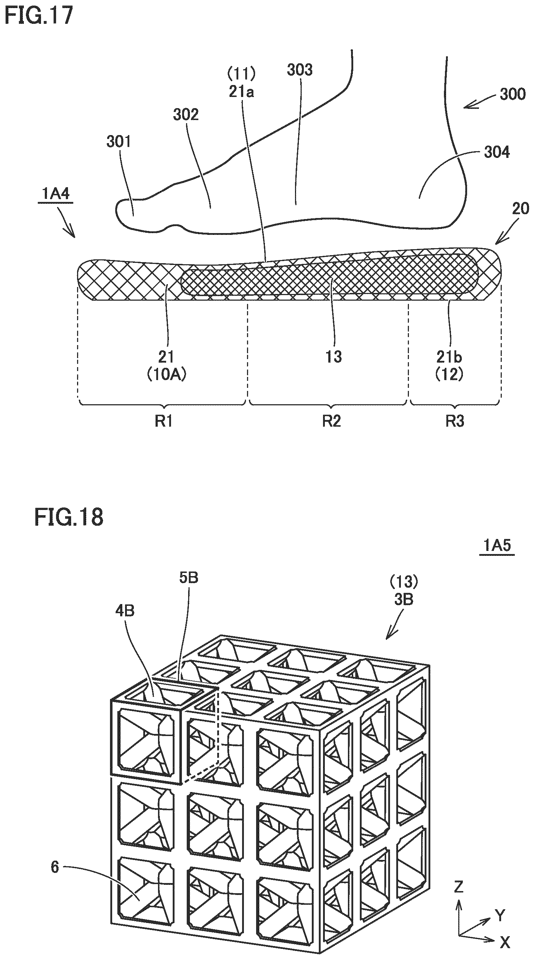

Furthermore, in the sandal 1A4 according to the fourth modification shown in Fig. 17, the cushioning portion 13 is provided in a manner of extending from the portion of the footbed portion 10A corresponding to the ball portion 302 of the wearer's foot 300, through the portion of the footbed portion 10A corresponding to the arch portion 303, to the portion of the footbed portion 10A corresponding to the heel portion 304 (i.e., reaching from the rear end vicinity portion of the forefoot portion R1 to the front end vicinity portion of the rearfoot portion R3).

Note that in the sandals 1A2 to 1A4 according to the second to fourth modifications, the cushioning portions 13 provided therein all satisfy the same conditions as those described for the sandal 1A according to Embodiment 1 described above (the basic structure of the three-dimensional mesh structure constituting the cushioning portion 13 and the elastic modulus of the material constituting the cushioning portion 13, the maximum outer dimension in the cross-section perpendicular to the extending direction of each of the plurality of the columnar portions 6, the thickness of the cushioning portion 13 in the direction perpendicular to the ground contact surface 12, etc.).

Therefore, even in the cases of the sandals 1A2 to 1A4 according to the second to fourth modifications, it is possible to obtain effects similar to the effects described in Embodiment 1 described above, providing a sandal that can stably support the wearer's foot in a deformed state without causing bottoming out.

As shown in Fig. 15 to Fig. 17, the sandals 1A2 to 1A4 according to the second to fourth modifications exemplify a case where the cushioning portion 13 is configured to be embedded in the footbed portion 10A. Specifically, the case assumes that the entire footbed portion 10A consists of the single additively manufactured product 2 manufactured by t the optical molding method of the three-dimensional additive manufacturing method, where the portions corresponding to the cushioning portion 13 are formed to satisfy the above-described conditions, and the portions other than the portions corresponding to the cushioning portion 13 are formed in a manner of not satisfying the above-described conditions.

In this regard, instead of such a configuration, only the cushioning portion 13 may be constituted of the single additively manufactured product 2 manufactured by three-dimensional additive manufacturing method, and the footbed portion 10A may be constituted by embedding the cushioning portion 13 in a member made of another material (such as a general midsole member, etc.). Also, the cushioning portion 13 does not necessarily need to be embedded in the footbed portion 10A, and the upper surface, lower surface, or peripheral surface of the cushioning portion 13 may be exposed from the footbed portion 10A.

### <Fifth Modification>

Fig. 18 is a schematic diagram for describing a three-dimensional structure of a cushioning portion of a sandal according to a fifth modification. Below, with reference to Fig. 18, a sandal 1A5 according to the fifth modification based on Embodiment 1 described above will be described.

The sandal 1A5 according to the fifth modification differs in its configuration from the sandal 1A according to Embodiment 1 described above only in that the cushioning portion 13 has a different three-dimensional structure.

Specifically, in the sandal 1A according to Embodiment 1 described above, the three-dimensional mesh structure 3A constituting the cushioning portion 13 is constituted by regularly and continuously arranging the unit structure 4A called fluorite-type lattice repeatedly. However, in the sandal 1A5 according to the fifth modification, as shown in Fig. 18, a three-dimensional mesh structure 3B constituting the cushioning portion 13 is constituted of unit structures 4B, which are rectangular lattices with central supports added, by regularly and continuously arranging the unit structures 4B repeatedly.

In this case as well, the unit structure 4B consisting of the three-dimensional lattice structure has a three-dimensional shape formed by the plurality of columnar portions 6 which extend in predetermined directions and are interconnected, and a unit space 5B occupied by the unit structure 4B has a hexahedral shape.

Even in the case of the sandal 1A5 according to the fifth modification, it is possible to obtain effects similar to the effects described in Embodiment 1 described above, providing a sandal that can stably support the wearer's foot in a deformed state without causing bottoming out.

### <Embodiment 2>

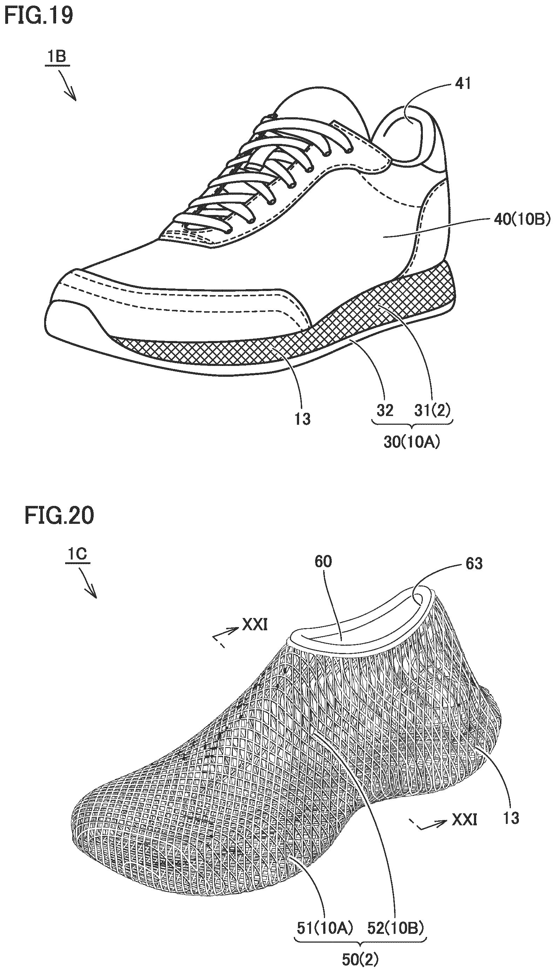

Fig. 19 is a perspective view of a shoe according to Embodiment 2. Below, with reference to Fig. 19, a shoe 1B according to the present embodiment will be described.

As shown in Fig. 19, the shoe 1B includes a sole 30 and an upper 40. The sole 30 has an overall substantially flat shape and constitutes the footbed portion 10A that supports the wearer's foot. The upper 40 has a bag-like shape covering portions of the wearer's foot excluding the sole of the foot, thereby constituting the foot cover portion 10B that covers the instep of the wearer's foot. The upper 40 is positioned above the sole 30.

The sole 30 includes a sole body 31 and an outsole 32, with the outsole 32 fixed to a lower surface of the sole body 31 by, for example, adhesion. The lower surface of the outsole 32 constitutes a ground contact surface, and the sole body 31 is the portion that primarily supports the wearer's foot. It is preferable that the outsole 32 has excellent wear resistance and grip, and the outsole 32 may be constituted of, for example, a rubber member.

The upper 40 has a footwear opening 41 at its upper portion through which the wearer's foot is inserted, and a space is formed inside the upper 40 where the wearer's foot is inserted during wear. A lower surface of the upper 40 is fixed to an upper surface of the sole body 31 by, for example, adhesion, and an inner bottom surface of the upper 40 constitutes a supporting surface that supports the sole of the wearer's foot during wear. Materials such as woven fabrics, knitted fabrics, non-woven fabrics, synthetic leather, resin, etc., are used for the upper 40, and for shoes particularly requiring breathability and lightness, double raschel warp knit fabric woven with polyester yarn is used.

In the shoe 1B according to the present embodiment, the sole body 31 consists of a single member and is constituted of the additively manufactured product 2 manufactured by the optical molding method of the three-dimensional additive manufacturing method. More specifically, the sole body 31 is constituted of the three-dimensional mesh structure 3A as shown in Fig. 5(A). Thus, the above-described entire sole body 31 of the sole 30 as the footbed portion 10A functions as the cushioning portion 13. Note that the material of the sole body 31 is not particularly limited and may be the same as the material of the sandal body 20 described in Embodiment 1 described above.

Here, the cushioning portions 13 provided in the shoe 1B according to the present embodiment satisfies the same conditions as those described in Embodiment 1 described above (i.e., the basic structure of the three-dimensional mesh structure constituting the cushioning portion and the elastic modulus of the material constituting the cushioning portion, the maximum outer dimension in the cross-section perpendicular to the extending direction of each of the plurality of the columnar portions, the thickness of the cushioning portion in the direction perpendicular to the ground contact surface, etc.).

Therefore, even in the case of the shoe 1B according to the present embodiment, it is possible to obtain effects similar to the effects described in Embodiment 1 described above, providing a shoe that can stably support the wearer's foot in a deformed state without causing bottoming out.

### <Embodiment 3>

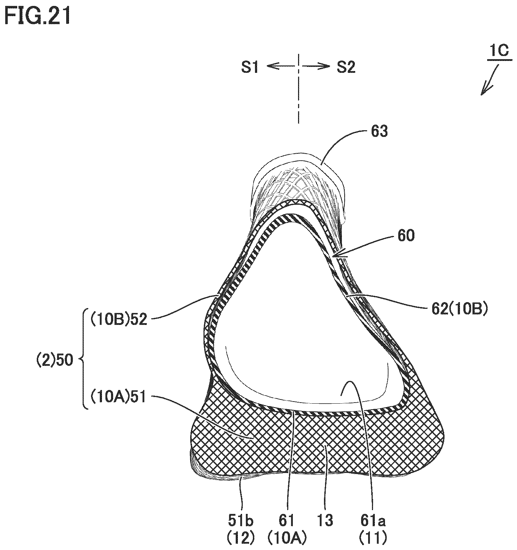

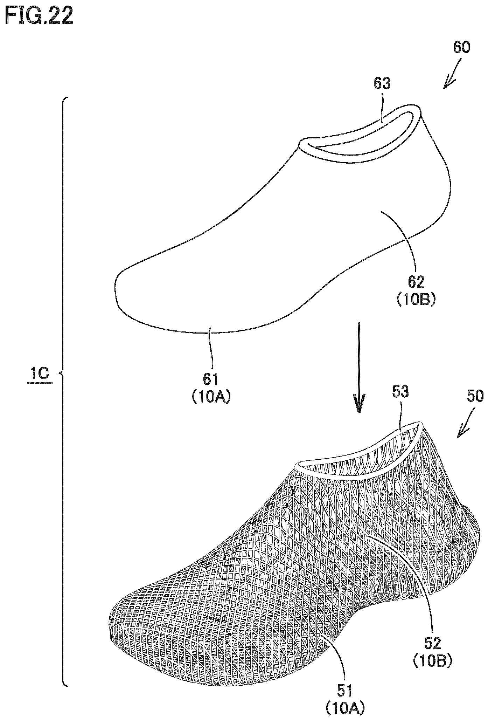

Fig. 20 is a perspective view of a shoe according to Embodiment 3, and Fig. 21 is a schematic cross-sectional view along line XXI-XXI shown in Fig. 20. In addition, Fig. 22 is an exploded view of the shoe shown in Fig. 20. Below, with reference to Fig. 20 to Fig. 22, a shoe 1C according to the present embodiment will be described.

As shown in Fig. 20 to Fig. 22, the shoe 1C is a sock-like shoe that covers almost the entire wearer's foot (i.e., the portion from the ankle to the end of the foot) and includes a shell 50 and an upper body 60. Both the shell 50 and the upper body 60 have bag-like shapes.

The shell 50 includes a sole portion 51 and an outer upper portion 52. The sole portion 51 has a substantially flat shape, and a lower surface 51b thereof constitutes the ground contact surface 12. The outer upper portion 52 stands upright from the periphery of the sole portion 51. An opening portion 53 is provided at an upper portion of the outer upper portion 52.

The upper body 60 includes a bottom portion 61 and an inner upper portion 62. The bottom portion 61 has a substantially flat shape, and an upper surface 61a thereof constitutes the supporting surface 11 that supports the sole of the wearer's foot during wear. The inner upper portion 62 stands upright from the periphery of the bottom portion 61. A footwear opening 63 through which the wearer's foot is inserted is provided at an upper portion of the inner upper portion 62.

The upper body 60 is accommodated in the shell 50 such that the bottom portion 61 of the upper body 60 is arranged on the sole portion 51 of the shell 50 and the inner upper portion 62 overlaps with the outer upper portion 52 of the shell 50. Thus, in the shoe 1C, the footbed portion 10A that supports the foot of the wearer's foot is constituted of the sole portion 51 of the shell 50 and the bottom portion 61 of the upper body 60, and the foot cover portion 10B that covers the instep of the wearer's foot is constituted of a part of the outer upper portion 52 of the shell 50 and a part of the inner upper portion 62 of the upper body 60.

Since the upper body 60 constitutes the portion that contacts the wearer's foot, it is preferable that the upper body 60 is constituted of a member that is flexibly deformable, and the upper body 60 may be made of, for example, woven or knitted fabric, nonwoven fabric, synthetic leather, resin, etc. Particularly, as described later, if woven or knitted fabric, non-woven fabric or the like of synthetic fibers with heat shrinkability is used, the upper body 60 can be made to better fit the wearer's foot. Examples of synthetic fibers with heat shrinkability include those mainly composed of polyester, polyurethane, etc.

That is, when the upper body 60 is constituted of woven or knitted fabric, non-woven fabric, or the like of synthetic fibers with heat shrinkability, the upper body 60 is pre-formed into a bag shape, and heat treatment is performed with a last, which is to be described later, inserted into the upper body 60, and thereby, the upper body 60 changes shape by thermally shrinking due to heating in a state that the upper body 60 is in close contact with the shaping surface of the last, and the shape after the change is maintained.

Therefore, by preparing a last corresponding to the shape of the wearer's foot and using it to shape the upper body 60 described above, the upper body 60 that fits the wearer's foot can be manufactured. Furthermore, by performing the heat treatment using the above-described last with the upper body 60 assembled into the shell 50, the upper body 60 will also fit the shell 50, thereby further improving the fit.

In the shoe 1C according to the present embodiment, the shell 50 consists of a single member and is constituted of the additively manufactured product 2 manufactured by the optical molding method of the three-dimensional additive manufacturing method. Here, the sole portion 51 of the shell 50 is constituted of the three-dimensional mesh structure 3A as shown in Fig. 5(A). Thus, the entire sole portion 51 as the footbed portion 10A functions as the cushioning portion 13. Note that the material of the shell 50 is not particularly limited and may be the same as the material of the sandal body 20 described in Embodiment 1 described above.

Here, the cushioning portions 13 provided in the shoe 1C according to the present embodiment satisfies the same conditions as those described in Embodiment 1 described above (i.e., the basic structure of the three-dimensional mesh structure constituting the cushioning portion and the elastic modulus of the material constituting the cushioning portion, the maximum outer dimension in the cross-section perpendicular to the extending direction of each of the plurality of the columnar portions, the thickness of the cushioning portion in the direction perpendicular to the ground contact surface, etc.).

Therefore, even in the case of the shoe 1C according to the present embodiment, it is possible to obtain effects similar to the effects described in Embodiment 1 described above, providing a shoe that can stably support the wearer's foot in a deformed state without causing bottoming out.

### <Embodiment 4>

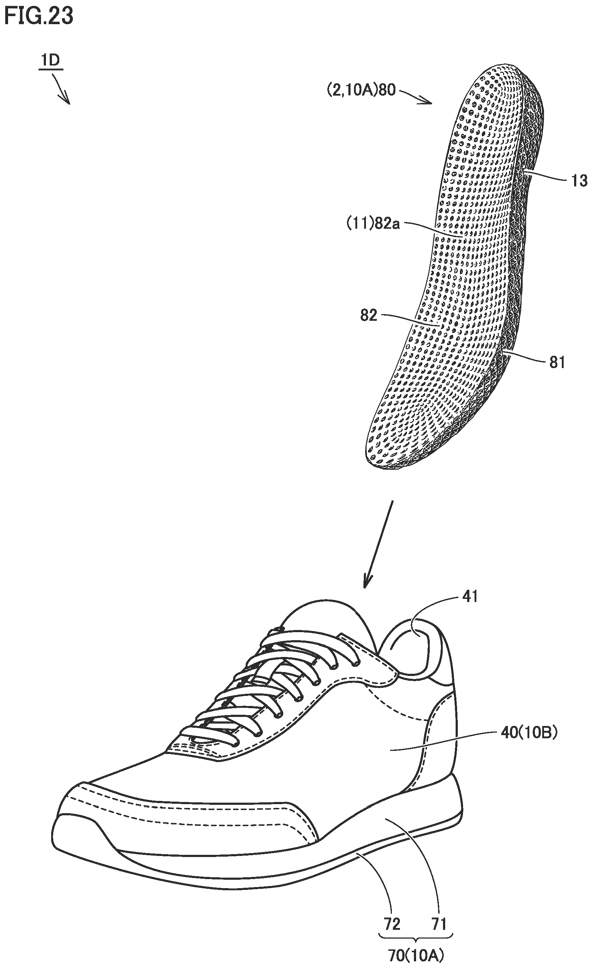

Fig. 23 is a perspective view of a shoe and a sockliner provided therein, according to Embodiment 4. Below, with reference to Fig. 23, a shoe 1D according to the present embodiment will be described.

As shown in Fig. 23, the shoe 1D includes a sole 70, the upper 40, and a sockliner 80. The sole 70 has an overall substantially flat shape. The upper 40 has a bag-like shape covering portions of the wearer's foot excluding the sole of the foot and is positioned above the sole 70. The sockliner 80 has an overall substantially flat shape and is provided in the shoe 1D by being inserted into the upper 40.

The sole 70 includes a midsole 71 and an outsole 72, with the outsole 72 fixed to a lower surface of the midsole 71 by, for example, adhesion. The lower surface of the outsole 72 constitutes a ground contact surface, and the midsole 71 is the portion that primarily supports the wearer's foot. The midsole 71 uses, for example, a resin-based foam material containing a resin material as the main component and a foaming agent or a crosslinking agent as a secondary component. It is preferable that the outsole 72 has excellent wear resistance and grip, and the outsole 72 may be constituted of, for example, a rubber member.

The upper 40 has a footwear opening 41 at its upper portion through which the wearer's foot is inserted, and a space is formed inside the upper 40 where the wearer's foot is inserted during wear. The lower surface of the upper 40 is fixed to the upper surface of the sole body 31 by, for example, adhesion. Materials such as woven fabrics, knitted fabrics, non-woven fabrics, synthetic leather, resin, etc., are used for the upper 40, and for shoes particularly requiring breathability and lightness, double raschel warp knit fabric woven with polyester yarn is used.

The sockliner 80 consists of a single member and is constituted of the additively manufactured product 2 manufactured by the optical molding method of the three-dimensional additive manufacturing method. The sockliner 80 has a two-layered structure including a base layer portion 81 and an upper layer portion 82, each configured to form a layer, with the upper layer portion 82 positioned above the base layer portion 81. Thus, an upper surface 82a of the upper layer portion 82 constitutes the supporting surface 11 that supports the sole of the wearer's foot during wear.

The base layer portion 81 is the portion that constitutes the cushioning portion 13, as will be described later, and the upper layer portion 82 is the portion that covers the base layer portion 81 to improve foot comfort. If a liner made of, for example, woven fabric or non-woven fabric is provided on the sockliner 80 to further cover the upper layer portion 82, the wearer's foot can be inserted more smoothly into the shoe 1D during wear.

Here, the base layer portion 81 is constituted of the three-dimensional mesh structure 3A as shown in Fig. 5(A). Thus, the base layer portion 81 functions as the cushioning portion 13 as described above. On the other hand, the upper layer portion 82 is constituted of a sheet-like structure, and a plurality of holes penetrating in the thickness direction of the upper layer portion 82 is provided in the upper layer portion 82. The plurality of holes is provided in the upper layer portion from the viewpoint of reducing weight and the viewpoint of improving the additive manufacturing accuracy of the sockliner.

As described above, the sockliner 80 is provided in the shoe 1D by being inserted into the upper 40; more specifically, the sockliner 80 is arranged on the inner bottom surface of the upper 40. Thus, in the shoe 1D, the footbed portion 10A that supports the foot of the wearer's foot is constituted of the sole 70 and the sockliner 80, and the foot cover portion 10B that covers the instep of the wearer's foot is constituted of the upper 40.

In the shoe 1D according to the present embodiment, the sockliner 80 consists of a single member and is constituted of the additively manufactured product 2 manufactured by the optical molding method of the three-dimensional additive manufacturing method. Among these, the base layer portion 81 of the sockliner 80 is constituted of the three-dimensional mesh structure 3A as shown in Fig. 5(A), as described above. Thus, the above-described entire base layer portion 81 of the sole 70 and the sockliner 80 as the footbed portion 10A functions as the cushioning portion 13. Note that the material of the sockliner 80 is not particularly limited and may be the same as the material of the sandal body 20 described in Embodiment 1 described above.

Here, the cushioning portions 13 provided in the shoe 1D according to the present embodiment satisfies the same conditions as those described in Embodiment 1 described above (i.e., the basic structure of the three-dimensional mesh structure constituting the cushioning portion and the elastic modulus of the material constituting the cushioning portion, the maximum outer dimension in the cross-section perpendicular to the extending direction of each of the plurality of the columnar portions, the thickness of the cushioning portion in the direction perpendicular to the ground contact surface, etc.).

Therefore, even in the case of the shoe 1D according to the present embodiment, it is possible to obtain effects similar to the effects described in Embodiment 1 described above, providing a shoe that can stably support the wearer's foot in a deformed state without causing bottoming out.

### <Summary of Disclosures in Embodiments, etc.>

The features disclosed in Embodiments 1 to 4, the modifications thereof, etc. described above can be summarized as follows.

### [Supplementary Note 1]

A footwear including: a footbed portion that supports a sole of a wearer's foot and has a ground contact surface, in which
the footbed portion includes a cushioning portion consisting of a single member made of an elastic material with an elastic modulus which is greater than or equal to 0.1 MPa and less than or equal to 100 MPa,
the cushioning portion is constituted of a three-dimensional mesh structure, where a plurality of unit structures, each of which is a three-dimensional lattice structure formed by a plurality of columnar portions which are interconnected, is repeatedly arranged,
each of the plurality of the columnar portions has an extending direction and a maximum outer dimension which is greater than or equal to 1.0 mm and less than or equal to 1.8 mm in a cross-section perpendicular to the extending direction, and
a thickness of the cushioning portion in a direction perpendicular to the ground contact surface is greater than or equal to 25.0 mm.

### [Supplementary Note 2]

The footwear according to Supplementary Note 1, in which
an occupancy rate of the cushioning portion is greater than or equal to 10% and less than or equal to 45%.

### [Supplementary Note 3]

The footwear according to Supplementary Note 1 or 2, in which
when a polyhedral space occupied by each of the unit structures is referred to as unit space, a length of one side of the unit space is greater than or equal to 3.0 mm and less than or equal to 20.0 mm.

### [Supplementary Note 4]

The footwear according to any one of Supplementary Notes 1 to 3, in which each of the plurality of the columnar portions extends non-parallel to a direction perpendicular to the ground contact surface.

### [Supplementary Note 5]

The footwear according to any one of Supplementary Notes 1 to 4, in which
the footbed portion includes a forefoot portion that supports a toe portion and a ball portion of a wearer's foot, a midfoot portion that supports an arch portion of the wearer's foot, and a rearfoot portion that supports a heel portion of the wearer's foot, and
the cushioning portion is located at least in the rearfoot portion.

### [Supplementary Note 6]

The footwear according to Supplementary Note 5, in which
the cushioning portion is also located in the forefoot portion in addition to the rearfoot portion.

### [Supplementary Note 7]

The footwear according to Supplementary Note 6, in which
the cushioning portion extends across the forefoot portion, the midfoot portion, and the rearfoot portion.

### [Supplementary Note 8]

The footwear according to Supplementary Note 6 or 7, in which
the maximum outer dimension of the columnar portions located in a portion included in the rearfoot portion is larger than the maximum outer dimension of the columnar portions located in another portion of the cushioning portion adjacent to the portion.

### [Supplementary Note 9]

The footwear according to any one of Supplementary Notes 6 to 8, in which
the maximum outer dimension of the columnar portions located in a portion supporting a portion of a sole of foot of the cushioning portion corresponding to the wearer's MP joint is larger than the maximum outer dimension of the columnar portions located in another portion of the cushioning portion adjacent to the portion.

### [Supplementary Note 10]

The footwear according to any one of Supplementary Notes 1 to 9, in which
the cushioning portion consists of a single additively manufactured product manufactured by an optical molding method of a three-dimensional additive manufacturing method.

### [Supplementary Note 11]

The footwear according to any one of Supplementary Notes 1 to 10, in which
the footwear is a sandal, and
the cushioning portion is provided in a sole of the sandal.

### [Supplementary Note 12]

The footwear according to any one of Supplementary Notes 1 to 10, in which
the footwear is a shoe, and
the cushioning portion is provided in a sole of the shoe.

### [Supplementary Note 13]

The footwear according to any one of Supplementary Notes 1 to 10, in which
the footbed portion includes a sole and a sockliner located above the sole, and
the cushioning portion is provided in the sockliner.

### <Other Aspects, etc.>

In the above-described embodiments and the modifications thereof, the three-dimensional mesh structure constituting the cushioning portion has been described as being constituted of a plurality of unit structures of a single type arranged repeatedly, but it is also possible to constitute the three-dimensional mesh structure of different types of unit structures. For example, a part of the cushioning portion may be constituted of the above-described fluorite-type lattices, while another part of the cushioning portion may be constituted of the above-described rectangular lattices with central supports added. It is preferable that when constituting the three-dimensional mesh structure of different types of unit structures in this way, the shape of the three-dimensional mesh structure changes continuously so that the shape transitions smoothly in the arrangement direction of the unit structures.

Moreover, in the above-described embodiments and the modifications thereof, an example has been described in which the cushioning portion provided in the footbed portion is manufactured by the optical molding method of the three-dimensional additive manufacturing method, but it is of course possible to manufacture the cushioning portion by other types of three-dimensional additive manufacturing methods, and the cushioning portion may also be manufactured by methods other than three-dimensional additive manufacturing methods such as injection molding.

Furthermore, in the above-described embodiments and the modifications thereof, the present invention has been described as being applied to sandals, shoes, sockliners attached thereto, etc., but the present invention can of course be applied to other types of footwears.

Moreover, the characteristic configurations disclosed in the above-described embodiments and the modifications thereof can be combined with each other without departing from the purpose of the present invention.

Thus, the above-described embodiments and the modifications thereof disclosed herein are illustrative in all respects and are not restrictive. The technical scope of the present invention is defined by the claims, and includes all modifications within the meaning and scope equivalent to the claims.

### REFERENCE SIGNS LIST

1A, 1A1 to 1A5: sandal, 1B to 1D: shoe, 2: additively manufactured product, 2': support portion, 3A, 3A', 3B: three-dimensional mesh structure, 4A, 4A', 4B: unit structure, 5A, 5A', 5B: unit space, 6: columnar portion, 10A: footbed portion, 10B: foot cover portion, 11: supporting surface, 12: ground contact surface, 13: cushioning portion, 20: sandal body, 21: sole portion, 21a: upper surface, 21b: lower surface, 22: belt portion, 23: footwear opening, 24: front opening portion, 30: sole, 31: sole body, 32: outsole, 40: upper, 41: footwear opening, 50: shell, 51: sole portion, 51b: lower surface, 52: outer upper portion, 53: opening portion, 60: upper body, 61: bottom portion, 61a: upper surface, 62: inner upper portion, 63: footwear opening, 70: sole, 71: midsole, 72: outsole, 80: sockliner, 81: base layer portion, 82: upper layer portion, 82a: upper surface, 100: three-dimensional additive manufacturing apparatus, 101: reservoir, 102: platform, 103: elevating mechanism, 200: liquid resin, 300: foot, 301: toe portion, 302: ball portion, 303: arch portion, 304: heel portion, R1: forefoot portion, R2: midfoot portion, R3: rearfoot portion.

## Claims

1. A footwear comprising: a footbed portion that supports a sole of a wearer's foot and has a ground contact surface, wherein
the footbed portion includes a cushioning portion consisting of a single member made of an elastic material with an elastic modulus which is greater than or equal to 0.1 MPa and less than or equal to 100 MPa,
the cushioning portion is constituted of a three-dimensional mesh structure, where a plurality of unit structures, each of which is a three-dimensional lattice structure formed by a plurality of columnar portions which are interconnected, is repeatedly arranged,
each of the plurality of the columnar portions has an extending direction and a maximum outer dimension which is greater than or equal to 1.0 mm and less than or equal to 1.8 mm in a cross-section perpendicular to the extending direction, and
a thickness of the cushioning portion in a direction perpendicular to the ground contact surface is greater than or equal to 25.0 mm.

2. The footwear according to claim 1, wherein
an occupancy rate of the cushioning portion is greater than or equal to 10% and less than or equal to 45%.

3. The footwear according to claim 1, wherein
when a polyhedral space occupied by each of the unit structures is referred to as unit space, a length of one side of the unit space is greater than or equal to 3.0 mm and less than or equal to 20.0 mm.

4. The footwear according to claim 1, wherein each of the plurality of the columnar portions extends non-parallel to a direction perpendicular to the ground contact surface.

5. The footwear according to claim 1, wherein
the footbed portion includes a forefoot portion that supports a toe portion and a ball portion of a wearer's foot, a midfoot portion that supports an arch portion of the wearer's foot, and a rearfoot portion that supports a heel portion of the wearer's foot, and
the cushioning portion is located at least in the rearfoot portion.

6. The footwear according to claim 5, wherein
the cushioning portion is also located in the forefoot portion in addition to the rearfoot portion.

7. The footwear according to claim 6, wherein
the cushioning portion extends across the forefoot portion, the midfoot portion, and the rearfoot portion.

8. The footwear according to claim 6, wherein
the maximum outer dimension of the columnar portions located in a portion included in the rearfoot portion is larger than the maximum outer dimension of the columnar portions located in another portion of the cushioning portion adjacent to the portion.

9. The footwear according to claim 6, wherein
the maximum outer dimension of the columnar portions located in a portion supporting a portion of a sole of foot of the cushioning portion corresponding to the wearer's MP joint is larger than the maximum outer dimension of the columnar portions located in another portion of the cushioning portion adjacent to the portion.

10. The footwear according to claim 1, wherein
the cushioning portion consists of a single additively manufactured product manufactured by an optical molding method of a three-dimensional additive manufacturing method.

11. The footwear according to any one of claims 1 to 10, wherein
the footwear is a sandal, and
the cushioning portion is provided in a sole of the sandal.

12. The footwear according to any one of claims 1 to 10, wherein
the footwear is a shoe, and
the cushioning portion is provided in a sole of the shoe.

13. The footwear according to any one of claims 1 to 10, wherein
the footbed portion includes a sole and a sockliner located above the sole, and
the cushioning portion is provided in the sockliner.
